(19) Europäisches Patentamt
European Patent Office
Office européen des brevets

(11) **EP 3 742 350 A1**

(12) **EUROPEAN PATENT APPLICATION**

(43) Date of publication:
**25.11.2020 Bulletin 2020/48**

(51) Int Cl.:
**G06N 3/063** (2006.01)          **G06N 3/08** (2006.01)

(21) Application number: **20167965.1**

(22) Date of filing: **03.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2019 US 201916418799**

(71) Applicant: **NVIDIA Corporation**
**Santa Clara, CA 95051 (US)**

(72) Inventors:
• **EBRAHIMI, Eiman**
  **Santa Clara, CA 95051 (US)**
• **ZULIFQAR, Arslan**
  **Santa Clara, CA 95051 (US)**
• **PAL, Saptadeep**
  **Santa Clara, CA 95051 (US)**

(74) Representative: **Kraus & Weisert**
**Patentanwälte PartGmbB**
**Thomas-Wimmer-Ring 15**
**80539 München (DE)**

(54) **PARALLELIZATION STRATEGIES FOR TRAINING A NEURAL NETWORK**

(57)    System and methods to train a neural network to systematically find a cross-over point, given the number of devices (e.g., Graphical Processing Units) used to train a deep learning (DL) model, that indicates which parallelization strategy to implement when optimizing the training of the DL model on a particular system to achieve maximum efficiency gains.

FIG. 1

EP 3 742 350 A1

**Description**

BACKGROUND

Growth in the use of deep learning (DL) and other machine learning models is prevalent and the datasets used to train them continue to increase in size which in turn leads to lengthy and longer training times. As machine learning gets more complex, the models become bigger and the datasets used to train these models contain more information. Thus, training machine learning models with larger datasets begin to effect the training times given that the number of devices needed to be employed also increases. The synchronization and communication overhead necessary to ensure accuracy among the increased number of devices further limits the overall training times. Conventional techniques for handling large datasets result in inefficiencies which become more pronounced as the datasets become larger and larger and the models become more complex.

BRIEF DESCRIPTION OF THE DRAWINGS

Various techniques will be described with reference to the drawings, in which:

FIG. 1 illustrates a diagram of a system in which an embodiment in accordance with this disclosure is implemented;

FIG. 2 illustrates a diagram of a stochastic batch gradient descent process representative of training a neural network with a batch of inputs in accordance with one embodiment;

FIG. 3 illustrates a diagram of a synchronous stochastic gradient descent process representative of data parallel training a neural network with a batch of inputs using multiple computing devices in accordance with one embodiment;

FIG. 4 illustrates a diagram of a generic deep network of data parallel training the network with a batch of inputs using two computing devices in accordance with one embodiment;

FIG. 5 shows a diagram of a generic deep network of model parallel training the network with a batch of inputs using two computing devices in accordance with one embodiment;

FIG. 6 illustrates a diagram of a generic deep network using both data parallel training and model parallel training in accordance with one embodiment;

FIG. 7 shows an illustrative example of a process for training a neural network in accordance with one embodiment;

FIG. 8 shows another illustrative example of a process for training a neural network in accordance with one embodiment;

FIG. 9 illustrates an example of parallel processing unit ("PPU"), in accordance with one embodiment;

FIG. 10 illustrates an example of a general processing cluster ("GPC"), in accordance with one embodiment;

FIG. 11 illustrates an example of a memory partition unit, in accordance with one embodiment;

FIG. 12 illustrates an example of a streaming multi-processor, in accordance with one embodiment; and

FIG. 13 illustrates a computer system in which the various examples can be implemented, in accordance with one embodiment.

DETAILED DESCRIPTION

In an embodiment, systems and methods implemented in accordance with this disclosure are utilized to achieve efficiency gains (e.g., improve training times) of large and complex deep learning (DL) models. An example of a DL model is a neural network. In an embodiment, an improved way of configuring neural network training using both model parallelism (MP) and data parallelism (DP) is determined and described herein. In an embodiment, DP involves using replicas of a model on independent workers (e.g., devices, processors) using independent subsets of a training dataset, referred to as mini-batches. MP involves distributing components of a neural network being trained among multiple workers (e.g., devices, processors), so each worker has a different component of the overall neural network being trained. In an embodiment, MP involves splitting the model across multiple workers while working on the same mini-batch. In an embodiment, the subsets of the training dataset (e.g., mini-batch) is a batch of inputs that are fed to each worker. In an embodiment, the collection of all the mini-batches in a training step is a global batch. In an embodiment, a worker is comprised of more than one device that is organized as a group of devices or more than one processor that is organized as a group of processors to form a single unit. In an embodiment, a worker is one device or one processor. In an embodiment, an improved configuration to train the neural network is determined by combining the usage of MP and DP. In an embodiment, the combination of MP and DP is adopted to minimize end-to-end training time for a given neural network on available hardware.

In an embodiment, the amount of parallelism using DP (e.g., the number of mini-batches that are used by different workers/devices/processors) is increased until efficiency gains are no longer significant (e.g., as defined by a set of criteria for significance). At that point, in an embodiment, MP is introduced and the amount of MP parallelism being introduced (e.g., the number of components the neural network being trained is split into) in conjunction with using DP is increased to achieve greater efficiency gains (e.g., improved training times).

In an embodiment, a dataset used to train a neural network is subdivided into subsets (e.g., mini-batches) and a collection of the mini-batches to form a global batch is processed across multiple computing devices such as Graphical Processing Units (GPUs)(e.g., using DP). In an embodiment, multiple Tensor Processing Units (TPUs) are used to process the subsets. As the global batch size scales/increases in number or size, the overall training time of training a given neural network starts to become inefficient. In an embodiment, the amount of time it takes to train the neural network using DP with accuracy begins to take longer as the global batch size increases. As such, in an embodiment, a second type of parallelism (e.g., MP) is implemented to work in conjunction with DP to create a hybrid parallelism (e.g., DP plus MP). In an embodiment, training a neural network using this hybrid parallelism allows each copy of the model that exists on a given worker to get model parallelized so that now, instead of each worker being one computing device, it comprises multiple computing devices. In an embodiment, every neural network will have a unique scale at which DP's scaling and statistical efficiency degradation is overcome by introducing MP to work in combination with DP to train the network and improve training times. Thus, in an embodiment, when global batch sizes are scaled, hybrid parallelism training provides better efficiency gains (e.g., more effective at minimizing end-to-end training times) than using DP alone. In an embodiment, the systems and methods described herein determines a strategy analytically, using information that is measured to indicate DP-alone scaling inefficiencies and MP-alone speedup and when the right mechanism to use is chosen for a given neural network, it is used for the number of GPUs that is chosen to be run at.

In an embodiment, the techniques described herein are utilized to determine when to implement a hybrid parallelism approach that uses MP with DP to overcome the inherent scaling and statistical efficiency losses that DP training experiences, when scaled, alone (e.g., when global batch size is increased beyond what the DP can continue to handle efficiently to maintain accuracy). In an embodiment, the end-to-end training times related to training a neural network using DP is monitored and analyzed to understand how scaling and statistical efficiency loss impacts training scalability, and the techniques described herein indicate that adding MP allows for training speedup achieved for a given neural network that is critical to the overall scalability of a hybrid parallelization strategy. Splitting up the data set (e.g., using DP) and splitting up the network (e.g., using MP) each individually provide efficiency gains, but for each way of parallelizing, there is a point where the efficiency gains are cancelled by the overhead it takes to combine the results of the parallel training. In an embodiment, when the size of the global batch in DP grows to a point where DP-only training speedup drops off significantly (e.g., training times are longer), MP can be used in conjunction with DP to improve training times beyond what DP achieves alone.

In the preceding and following description, various techniques are described. For purposes of explanation, specific configurations and details are set forth in order to provide a thorough understanding of possible ways of implementing the techniques. However, it will also be apparent that the techniques described below may be practiced in different configurations without the specific details. Furthermore, well-known features may be omitted or simplified to avoid obscuring the techniques being described.

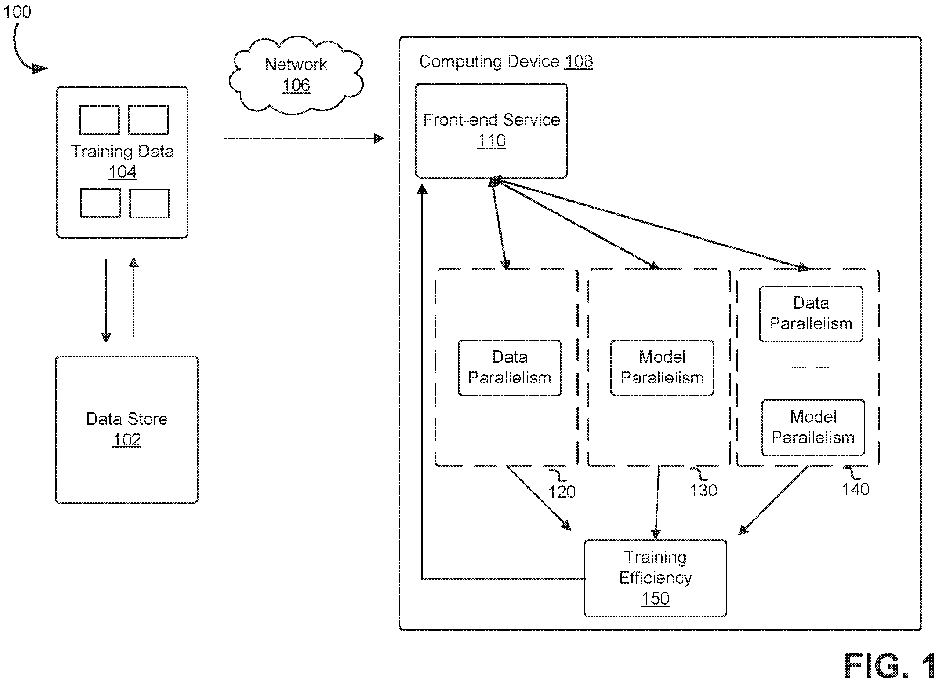

FIG. 1 illustrates a diagram of a system 100 in which an embodiment in accordance with this disclosure is implemented. In an embodiment, the system 100 is a computing environment that comprises a data store 102 or data storage service/device. The data store 102 may be configured to store data, metadata, training data, training data threads, and the like. In an embodiment, the training data comprises sets of image data or video data that, when obtained by one or more neural networks, trains the one or more neural networks for facial recognition purposes. In an embodiment, the training data comprises speech or audio data that, when obtained, by one or more neural networks, trains the one or more neural networks for speech recognition. In an embodiment, the data store 102 stores training data 104 (e.g., training data threads) used to train a neural network. In an embodiment, a neural network is also be referred to as a deep network or simply a network as described herein. The training data 104 may comprise of a data structure such as an array or a matrix. Subsets of the training data 104 may be referred to as mini-batches and a collection of the mini-batches may be referred to as a global batch. In an embodiment, these mini-batches used to train the neural network may be overlapping or proper subsets (non-overlapping). In an embodiment, the data store 102 is configured to satisfy requests to obtain training data 104 by sending the training data 104, via a network 106, either through a wired or wireless network, to a computing device 108.

In an embodiment, the computing device 108 is a Graphics Processing Unit (GPU) or, in another embodiment, representative of multiple computing devices that comprise multiple GPUs. In an embodiment, the computing device 108 is representative of a neural network, where the neural network uses the training data 104 to train the network. In an embodiment, the computing device 108 is configured to receive or obtain input training data 104 and determine which parallelization strategy to implement such that the computing device 108 is trained to maximize training efficiency. The input training data 104 may be received by the computing device 108 from the data store 102, another computing device, computing service, virtual machine, virtual service (not depicted in FIG. 1) outside or inside of the system 100, via the network 106.

In an embodiment, the computing device 108 comprises a front-end service 110. The front-end service 110 may be a computer system or component thereof configured to receive or obtain input training data 104. The front-end service 110, in an embodiment, is a service frontend comprising one or more processors and memory to store instructions that, as a result of execution, cause the front-end service 110 to perform various processes and methods as described herein. In an embodiment, each of the one or more processors are logical processors where each logical processor is capable of executing its own stream of instructions simultaneously. In an embodiment, the front-end service 110 is configured with executable code to submit and receive web application programming interface (API) requests. In an embodiment, the front-end service 110 is a computing service/device such as a server computer system, a server cluster, a virtual computer system, a virtual server, a virtual runtime environment, a container environment, a server less execution environment, service hosting system, or any suitable computing entity that is used and associated with computing device 108 to receive input training data 104.

In an embodiment, the front-end service 110 monitors the training efficiency 150 that indicates training times, power consumption, and/or other information of the computing device 108 when trained using at least one of DP 120, MP, 130, or the combination of DP and MP 140. That is, in an embodiment, the front-end service 110 processes the input training data 104 and sends an indication or a set of instructions to cause at least one type of parallelism to be implemented to train the computing device 108. In an embodiment, one type of parallelism that is applied is data parallelism (DP) 120 where the computing device 108 is trained by using replicas of a model network on independent computing devices by using independent subsets of the training data 104. In an embodiment, and as indicated above, subsets of the training data 104 are referred to as mini-batches. In an embodiment, another type of parallelism that is applied is model parallelism (MP) 130 where the model is split across multiple workers while working on the same mini-batch. In an embodiment, yet another type of parallelism that is applied is hybrid parallelism that includes training the computing device 108 using both DP and the MP

In an embodiment, training efficiency 150 of each of these parallelism strategies is monitored and information related to training efficiency 150 is provided as feedback to the computing device 108 either to the front-end service 110 or another service associated with the computing device 108 to determine, based on various training tests or predetermined information, which parallelism approach to apply to maximize training efficiency 150 of the computing device 108 given the training data 104 and amount of training data 104 that has been received. In an embodiment, training efficiency 150 is a data store, data storage device, buffer, or message queue that stores values or information related to training times. Moreover, in an embodiment, training efficiency 150 is a data store that is separate from the computing device 108 but maintains communication with the commuting device 108, via network 106.

In an embodiment, the front-end service 110 is removed from the computing device 108 and an integer linear programming based tool, such as an DLPlacer, is software that is run in connection with the computing device 108, such that when the tool is executed, the tool is optimally placed to maximize training speedup (e.g., maximize training efficiency). In an embodiment, this tool is implemented to produce results to indicate training efficiency 150 when DP 120 is used alone and further provides information to the computing device 108 to indicate how many portions of the neural network ought to be split into (e.g., when and how much MP to use) to provide the maximum efficiency when the global batch size of the training data 104 is scaled beyond what the DP is able to handle alone efficiently. In an embodiment, this tool is implemented to produce results to indicate training efficiency 150 of MP alone and further provides information to the computing device 108 to indicate whether to introduce and implement DP with MP

In an embodiment, the integer linear programming based tool indicates to the computing device 108 on how to maximize resource utilization. The integer linear programming based tool may extract parallelism between operations in a network. In an embodiment, as a result of using the integer linear programming based tool, the resources needed for communication overhead of moving data between nodes may also be minimized. Using the tool, in an embodiment, neural networks are expressed as data flow graphs (DFGs). In an embodiment, nodes of the DFP correspond to compute operations and unidirectional edges where the edges show dependencies between the operations. In an embodiment, each of the nodes has an operation expected execution time and memory footprint. In an embodiment, an edge weight corresponds to the number of bytes that is exchanged between the operations that are connected therein. In an embodiment, the node and edge weights are received by profiling a model on a computing device (e.g., GPU). In an embodiment, the node and edge weights can be analytically calculated. In an embodiment, the tool reduces per step training time by providing an assignment of compute DFG operations to the hardware graph (e.g., placement), a schedule, and a communication routing of activations, weights, and gradients. In an embodiment, the tool returns a solution that is correct when each operation is mapped to a single and only device, the dependencies between all the operations are satisfied, the co-located operations are not overlapping during execution, and the total amount of memory does not exceed device memory capacity. In an embodiment, while satisfying all the conditions listed above, the tool also assumes that two operations, which are co-located on a device are executed back-to-back, does not have any delay between the terminus of one operation and the start of another, communicating a data chunk of size $S$ on a link with bandwidth $B$ and latency $L$ takes ($S/B + L$) time, and communication of tensors between devices are overlapping with computation. In an embodiment, based on these assumptions, the tool predicts the training speedup for a given MP solution, where the MP is then applied to be used in combination with DP to better train a network.

As noted above, in an embodiment, the computing device 108 using the tool or a front-end service 110 determines which one of DP 120, MP, 130, or a combination of DP and MP 140 is used. In an embodiment, as the global batch size continues to grow, the amount of processors needed to process the increase of training data 104 also grows. In an embodiment, as a result and at some point, DP 120 may reach a tipping point where it begins to experience longer training times (e.g., training slow down) related to training the computing device 108. In an embodiment, the tipping point is also referred to as a crossover-point, threshold value, or maximum efficiency value. At that point, in an embodiment, the computing device 108 applies another type of parallelism such that training times are reduced or improved after this other type of parallelism is introduced. In an embodiment, the improvement in training time is identified by comparing it against what the training time would be if the computing device 108 continued to be trained using DP 120 alone versus what the training time would be if the computing device 108 used the combination of DP and MP 140.

In an embodiment, the computing device 108 is trained using a combination of training DP and MP 140 to achieve yet another level of training efficiency. That is, by identifying DP's tipping point (e.g., the maximum amount of training data or training data threads that allows DP 120 to train the network without experiencing longer training times), in an embodiment, a determination is made when hybrid parallelization is applied (hybrid parallelization outperforming DP alone typically occurs at different scales for various neural networks). If this specific level of training efficiency fails to be met when the computing device 108 is trained using the combination of DP and MP 140, in an embodiment, MP is reduced and the computing device 108 is trained using just DP 120 and a reduction of MP 130 or just DP 120 alone. In an embodiment, DP 120 is reduced instead of MP 130.

As such, in an embodiment, the training efficiency 150 is based on measurements from the training times associated with training the computing device 108. In an embodiment, a certain level of training efficiency indicates that training times associated with training the computing device 108 using the combination of training data DP and MP 140 is at or below training times associated with training the computing device 108 using only DP and thus, this information may be used to cause the front-end service 110 or the integer linear programming based tool associated with the computing device 108 to apply this hybrid parallelization strategy using both DP and MP 140 until training the computing device 108 reaches another maximum efficiency.

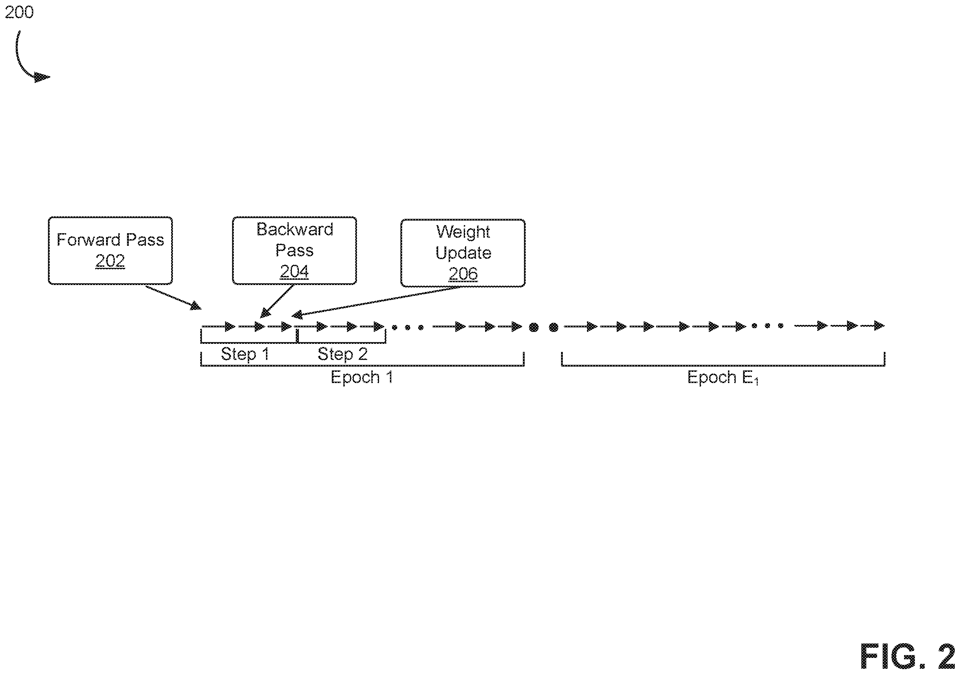

FIG. 2 illustrates a diagram 200 of a stochastic batch gradient descent process representative of training a neural network with a batch of inputs in accordance with one embodiment. In neural network training, in an embodiment, a batch of inputs is first forward propagated (forward passed) 202 through the network such that a calculation of the loses is performed for each of the inputs in the batch of inputs. The losses are then back propagated (backward passed) 204 through the network to such that a calculation of the gradients is performed. In an embodiment, the batch's gradients are then taken together and averaged and further used to update the weights 206. In an embodiment, the batch of inputs has a size that is elected such that all of the computing resources of a specific device used for training can be utilized to the full extent. In an embodiment, this entire process is known as the stochastic batch gradient descent representative of training a neural network. That is, in an embodiment, one forward pass 202 and backward pass 204 together an update to the gradients associated with the weights 206 is referred to as a training step. In an embodiment, a single iteration that runs through the training data set, given that all inputs are processed once, involves multiple steps and is referred to as an epoch. In an embodiment, the training process, as shown in FIG. 2 runs multiple epochs until some predetermined or optimal training accuracy is reached.

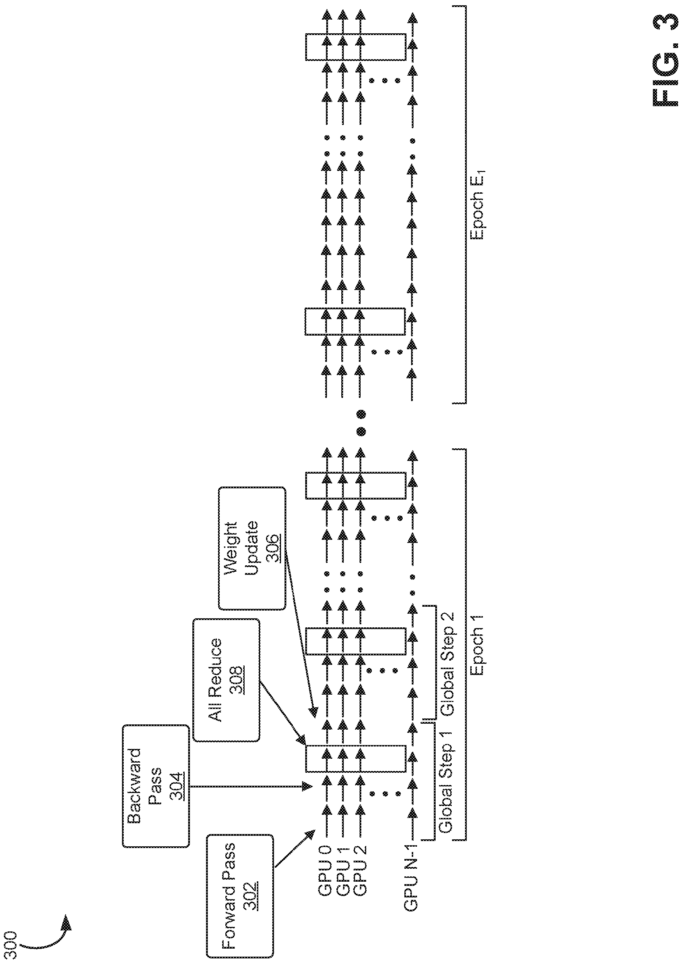

FIG. 3 illustrates a diagram 300 of a synchronous stochastic gradient descent process representative of DP training a neural network with a batch of inputs using multiple computing devices in accordance with one embodiment. In an embodiment, training speeds are sped up using DP when a full set of model parameters (e.g., weights) are replicated across multiple computing devices/workers (e.g., GPU 0, GPU 1, ... GPU N-1). As shown in FIG. 3, each of the workers independently works through a forward pass 302 and backward pass 304 on a different batch of inputs. In at least an embodiment, gradients are then communicated across each of the workers and averaged. Thereafter, in an embodiment, each one of the workers then applies the same set of gradient values to the model weights 306 and any communication of the gradients across each of the workers is done using an all-reduce communication 308. In an embodiment, updates to the model are performed after each iteration (by using the average calculated of all the gradients). In an embodiment, the batch of inputs per worker is identified as a mini-batch and the collection of all the mini-batches in a training step is a global batch.

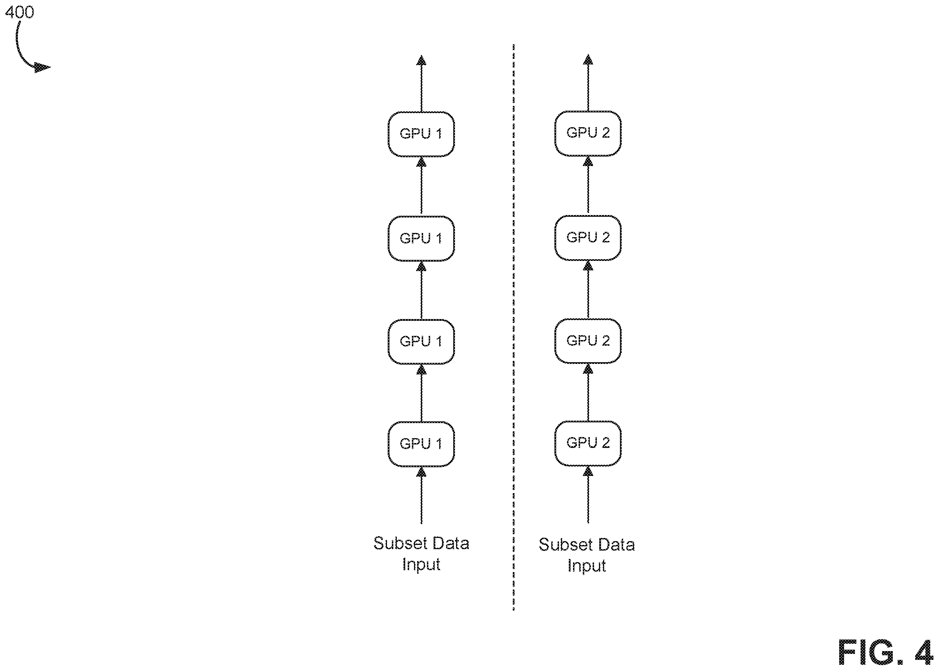

FIG. 4 illustrates a diagram 400 of a generic deep network of DP training the network with a batch of inputs using two computing devices (e.g., 2 GPUs) in accordance with one embodiment. In an embodiment, each computing device computes errors and gradients for a subset of a dataset or, also referred to as a mini-batch of inputs from a global batch of inputs. As indicated above, the dataset may be comprised of a data structure such as an array or matrices where each element in the data structure is used to train a neural network. The training data may comprise of labeled data such as image data, video data, speech data, audio data, text, or the like. In an embodiment, the parameters and gradients are then communicated across the two computing devices using Peripheral Component Interconnect Express (PCI-e) or any other communication protocol between the computing devices.

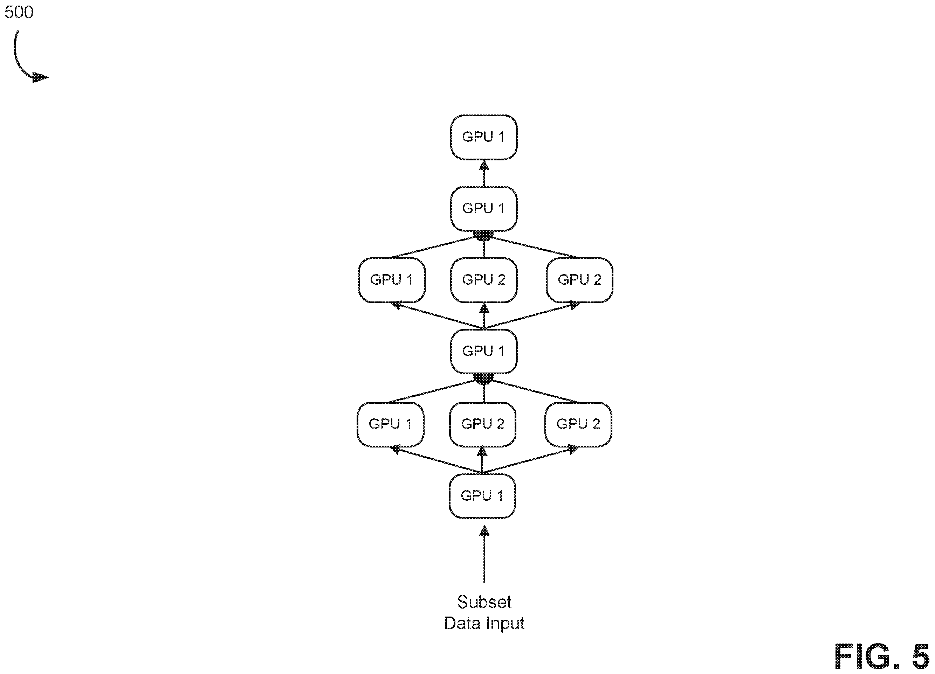

In an embodiment, the diagram 400 as shown in FIG. 4 illustrates just two computing devices; however, more than two computing devices are implemented to train the deep network. As described herein, implementing DP alone may begin to experience inefficiencies (e.g., longer training times) as the global batch size continue to increase or scale and implementing an additional parallelism technique such as MP as described throughout this disclosure and further in FIG. 5 may improve efficiency gains for training the deep network.

FIG. 5 shows a diagram 500 of a generic deep network of MP training the network with a batch of inputs using two computing devices in accordance with one embodiment. In an embodiment, the network is split by placing different operations of the diagram 500 or onto different devices. MP training is traditionally used for networks whose parameters will not fit into a single device's memory. However, in an embodiment, MP provides per step training speedup under the circumstances when the entire network fits on one device. In an embodiment, independent operations are concurrently performed on various devices, as shown in FIG. 5. Splitting a dataflow graph (DFG) among multiple devices is non-trivial for many networks. In an embodiment, the overhead with respect to the communication between compute nodes pertaining to moving data between devices is a considerable amount so, at times, it could possible outweigh any gains provided by MP. Thus, in an embodiment, a DFG for a network is divided and many considerations such as compute intensity for each one of these devices, the bandwidth of the inter-device, and even network topology ought to be considered.

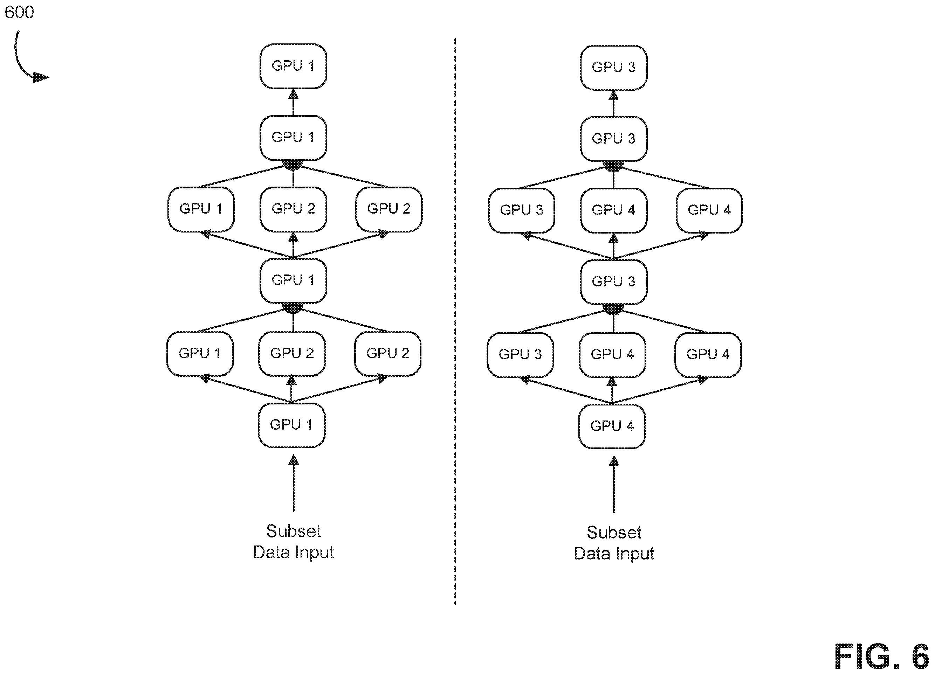

FIG. 6 illustrates a diagram 600 of a generic deep network being trained using both DP and MP in accordance with one embodiment. In an embodiment, using both DP and MP together, when the global batch size is scaled, improves end-to-end training times associated with training a neural network. In an embodiment, there are at least three factors that cause end-to-end training times for a neural network to vary: the average time per step ($T$), the number of steps per epoch ($S$) and the number of epochs ($E$) required to converge to a desired accuracy. (The definitions of training steps and epochs are discussed above with respect to the description of FIG. 2.) In an embodiment, a total amount of training time(e.g., time to converge ($C$)) is expressed as:

$$C = T \times S \times E \qquad (1)$$

where $T$ is determined, in an embodiment, by primarily the compute efficiency, i.e., given the same training setup, algorithm, and mini-batch size, $T$ depends solely on the compute capability of a device. In an embodiment, hardware devices that handles better performance provides smaller $T$ values. $S$, however, in an embodiment, is dependent on the amount of inputs in the training dataset and also dependent on the global batch size. In an embodiment, every input or item in the dataset is processed once per epoch. In an embodiment, thus, the number of steps per epoch ($S$) is equal to the number of items in the data set, divided by the global batch size (e.g., the size of the training input data). In an embodiment, the number of epochs to converge ($E$) depends on the global batch size and other training hyper-parameters.

In an embodiment, before MP is combined with DP and applied to train a network, the training time for using DP alone is monitored, calculated, and/or analyzed. In an embodiment, the use of DP, in isolation, to speed up training is employed using N-way data parallelism ($SU_N$) compared to training on a single device, and it is represented by:

$$SU_N = \frac{T_1}{T_N} \times \frac{S_1}{S_N} \times \frac{E_1}{E_N} \qquad (2)$$

In an embodiment, $T_1$ is the average training time per step when only a single device is used for training, while $T_N$ is the time per step when N data parallel devices (with a constant mini-batch size per device) are used. In an embodiment, $T_N$ is always larger than $T_1$ primarily due to the fact that in DP, after each device has performed a forward and backward pass, the gradients are exchanged between the devices using all-reduce communication (see description to FIG. 3). In an embodiment, the communication overhead represented by $\frac{T_1}{T_N}$ will never be larger than one and is typically less than one. In an embodiment, this ratio of $\frac{T_1}{T_N}$ is the scaling efficiency ($SE_N$) of $N$-way DP.

In an embodiment, $S_1$ represents the total number of steps required per epoch under the circumstance with a single device being used, while $S_N$ is the number of steps per epoch when $N$ devices are used. In an embodiment, under the circumstance that a single device is used, the global batch size is equal to the mini-batch size. In an embodiment, $N$-way data parallelism for each device performs an independent step with its own mini-batch of data. Therefore, in an embodiment, the global batch size is $N$-times the mini-batch size per device. Thus, in an embodiment, $\frac{S_1}{S_N}$ is also equal to $N$.

In an embodiment, $E_1$ represents the number of epochs to converge under the circumstance where a single device is used. In an embodiment, $E_N$ is the number of epochs required when $N$ amount of devices are used. In an embodiment, with bigger global batch sizes (higher number of $N$), the gradients from a bigger number of training samples are averaged. In an embodiment, as a result of the averaging, it results in model over-fitting as well as a tendency to get attracted to local minima or saddle points. In an embodiment, the network would then require more epochs to converge. As such, in an embodiment, $\frac{E_1}{E_N}$, is usually less than one. Equation 2 can thus be simplified as:

$$SU_N = SE_N \times N \times \frac{E_1}{E_N} \qquad (3)$$

In an embodiment, when training with the amount of devices (N), both $SE_N$ and $\frac{E_1}{E_N}$ decrease. In an embodiment, with bigger global batch sizes, hyper-parameter tuning is applied in an effort to minimize the increase in number of epochs required for convergence. In an embodiment, however, for any particular network, beyond a certain global batch size, the number of epochs required to converge increases rapidly, regardless of hyper-parameter tuning.

In an embodiment, the MP training times is also monitored, calculated, and/or analyzed on a given neural network. As noted above, using solely MP alone does not scale well and thus would not be considered a broadly applicable strategy with a larger number of devices and datasets. However, training times with using MP may be described herein for reference purposes. That is, in an embodiment, using MP enables multiple devices to perform operations on the same mini-batch simultaneously. In an embodiment, using MP reduces the training step time for a single step (e.g., term "T" in Equation 1). In an embodiment, the speedup from M-way MP is represented by $SU^M$. In an embodiment, the measurements for M-way MP is measured by splitting a network across multiple devices and measuring the per step execution time. In an embodiment, it is noted that the $SU^M$ speedup already includes the overhead for communication pertaining to data movement between dependent operations placed across multiple devices.

As previously noted, in an embodiment, the global batch size stays the same when using just MP Therefore, in an embodiment, the number of steps per epoch (e.g., term "S" in Equation 1) and number of epochs required to converge (e.g., term "E" in Equation 1) stay the same. In an embodiment, when improving $SU^M$, it minimizes the convergence time by solely reducing term T in Equation 1 (while the other two terms remain constant). In an embodiment, MP alone is not considered a broadly applicable scalable parallelization strategy. However, in an embodiment and as described throughout this disclosure, MP is combined with DP to extend training scalability beyond the limitations that DP and MP alone provide.

In an embodiment, a hybrid parallelism strategy (e.g., using the combination of DP and MP) is applied to achieve maximum efficiency (e.g., improve training times) of training a neural network. As described above, in an embodiment, the speedup is obtained using $N$ - *way* DP as provided by Equation 3. In an embodiment, assuming that the system is scaled up to $N$ devices using $N$ - *way* DP and the training speedup achieved are at or above maximum efficiency and if additional devices were to become available for training, the neural network is trained either using DP alone or with the hybrid approach. In an embodiment, the network identifies when to use DP alone, and when to combine DP with MP to obtain the highest possible training speedup (e.g., maximize efficiency or training times). In an embodiment, by applying DP alone, the speedup from using additional devices (e.g., $M \times N$) compared to one device is (substituting $M \times N$ for $N$ in Equation 3):

$$SU_{M \times N} = \text{SU}_{M \times N} \times M \times N \times \frac{E_1}{E_{M \times N}} \qquad (4)$$

In an embodiment, the speed up from $M \times N$-way DP (Equation 4) and speedup from N-way DP (Equation 3) is compared. In an embodiment, the scaling efficiency is generally lower for the system with $M \times N$-way DP compared to $N$ - *way* so an all-reduce communication happens between a larger number of devices and thus, causes training time slow down. In an embodiment, depending on the values of N, M, and also the system configurations, all-reduce communication potentially crosses slower inter-node links. In an embodiment, this leads to an increase regarding all-reduce times and reduces $SE_{M \times N}$. Moreover, in an embodiment, since global batch size is larger at $M \times N$ devices (to maintain a constant mini-batch size), the number of steps per epoch is smaller by a factor $M$ compared to $N$-way DP. Even further, in an embodiment, the number of epochs required, $E_{M \times N}$, is greater than or equal to $E_N$. In an embodiment, these factors all provide lower efficiency as the number of devices employed in DP training grows.

In an embodiment, the application of $M \times N$ devices in a hybrid parallelization strategy of N-way DP where each worker uses $M$-way MP, each worker's per step speedup is represented by $SU^M$. Thus, the overall training time/speedup is expressed as:

$$SU_N^M = SU^M \times SE_N \times N \times \frac{E_1}{E_N} \qquad (5)$$

In an embodiment, the comparison is made between hybrid $N$-way DP with $M$-way model parallel workers, versus $N$-way DP with single GPU workers. In an embodiment, the global batch size will remain the same. In an embodiment, in the $M \times N$-device configuration, every one of the $M$ devices are grouped into a single data-parallel worker. In an embodiment, the number of steps per epoch does not change as that of $N$-way DP at $N$ and $\frac{E_1}{E_N}$ remains the same as well. As such, in an embodiment, the per-step speedup achieved through MP increases the overall training speedup by a factor of $SU^M$, when comparing Equations 3 and 5.

In an embodiment, Equations 4 and 5 are substituted into Equation 6, and as a result, a determination is made to indicate that the conditions under which using hybrid parallelization (e.g., using the combination of DP and MP) is better than DP scaling alone. In an embodiment, Equation 6 indicates that if the speedup obtained from MP (for a given model parallelization step) is big enough to overcome the scaling and statistical efficiency loss that comes from increased communication, synchronization overhead, and global batch size increase respectively, the application of a hybrid parallelization (e.g., using the combination of DP and MP) strategy improves network training time.

$$\text{SU}_N^M > \text{SU}_{M \times N}$$

$$SU^M \times SE_N \times N \times \frac{E_1}{E_N} > SE_{M \times N} \times M \times N \times \frac{E_1}{E_{M \times N}} \qquad (6)$$

$$SU^M > M \times \frac{SE_{M \times N}}{SE_N} \times \frac{E_N}{E_{M \times N}}$$

In an embodiment, in a system, the implementation of MP provides a 45% and 65% improvement with respect to training efficiency when using two and four GPUs, respectively. In an embodiment, using DP only is a good strategy that scales well for up to 32 devices after which the improvement in training times or training speedup slows down. In an embodiment, this enables a hybrid 32-way DP & 2-way MP hybrid parallelization strategy to perform better than 64-way DP given the scaling and statistical efficiency losses at 64 devices, for this example.

In an example, similarly, a hybrid 16-way DP & 4-way MP hybrid strategy outperforms DP-only when the devices are scaled from 32 to 128 devices. However in this example, this hybrid strategy's performance is less efficient than the hybrid strategy of 32-way DP & 2-way MP. In an embodiment, 4-way MP's per step speedup ($SU^4$) does not overcome the trade-off (of using four machines for each data-parallel worker) as efficiently as 2-way MP's per step speedup, $SU^2$ (when using two machines for each data-parallel worker). Thus, in an embodiment, the relative improvements with respect to any device count is a factor before provided with the choice of parallelization strategy, which is critical to the training speedup obtained when scaling to larger number of devices. In an embodiment, most of the time, the choice is dependent on the neural network's properties and system configuration parameters as described above, so there is no single solution or one size fits all solution to efficient scale-out multi-device training.

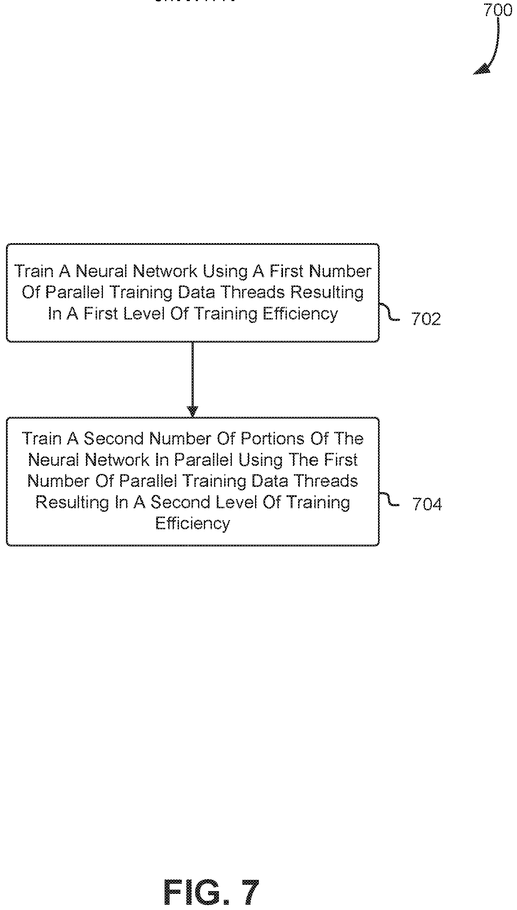

FIG. 7 shows an illustrative example of a process 700 for training a neural network in accordance with one embodiment. That is, in an embodiment, a neural network is trained using a first number of parallel training data threads that results in a first level of training efficiency 702. In an embodiment, the first number of parallel training data threads is referred to as the global batch size as described above with respect to FIG. 1. For example, the neural network is trained by using the global batch on multiple computing devices working in parallel (e.g., DP). In an embodiment, the first level of training efficiency is indicative of training times when training the neural network using DP. In an embodiment, the first level of training efficiency is also referred to as an intermediate level of training efficiency.

In an embodiment, the neural network is trained using DP that results in the first level of training efficiency in view of configuration parameters of the network and the size of the global batch. In an embodiment, the neural network being trained using DP that results in a first level of efficiency is an indication that maximum training efficiency has been reached. If DP is increased any further, the network results in a decrease in efficiency due to the additional overhead caused by combining the results from all the devices (nodes) that are running in parallel. In an embodiment, instead of reaching a maximum efficiency, the first level of training efficiency is reached when the efficiency cannot get any better given the limited amount of devices (nodes) available to train the network. For example, although the network may achieve some sort of training efficiency gains by using DP alone, the gains may be small, so the network may determine that greater gains is achieved by introducing MP, for example, where the gains are more significant. As described in connection with FIG. 1, in an embodiment, a front-end service or a software tool (e.g., DLPlacer) is run in connection with the neural network that determines when training the network using DP reaches this first level of efficiency.

In an embodiment, once the first level of efficiency has been met, a front end service or a software tool (e.g., DLPlacer) then determines to train the network using a second number of portions of the neural network in parallel using the first number of parallel training data threads resulting a second level of training efficiency 704. In an embodiment, the neural network is now trained using both the first number of parallel training data threads in conjunction with a number of portions of the neural network in parallel (e.g., using both DP and MP). In an embodiment, as described above in connection with FIG. 1, the number of portions of the neural network is determined and applied such that the neural network is trained to reach this second level of efficiency. In an embodiment, a determination for the optimal combination of using DP and MP to train the network is performed by testing analytically the different number of portions of the neural networks and further applying the different number of portions. In an embodiment, although testing is performed analytically, testing is also performed non-analytically.

In an embodiment, as described above with respect to FIG. 6, if the speedup obtained from MP (for a given model parallelization step) is large enough to overcome the scaling and statistical efficiency loss that comes from increased communication, synchronization overhead, and global batch size increase when using DP alone, employing a hybrid parallelization (e.g., using the combination of DP and MP) strategy allows the neural network to be trained at this second level of efficiency (which is indicative of an improvement in training times).

As an example to describe the process of FIG. 7, a dataset for training a neural network is first split into four subsets where a first level of efficiency (e.g., maximum efficiency) is obtained: T1, T2, T3, and T4. In an embodiment, subsequently, as the first level of efficiency is met, portions of the neural network are split and applied such that the training reaches a second level of efficiency (e.g., another maximum efficiency). In an embodiment, the neural network is implemented with a strategy that uses a combination of MP and DP as to what would be the most efficient way to train the network. In an embodiment, the neural network is efficiently trained by splitting the network up into three components: M1, M2, and M3. In an embodiment, the hybrid parallelism approach indicates that each of T1, T2, T3, and T4 are then used to train each of M1, M2, and M3. In this example, it would be most efficient to train using 12 processors (four training subsets times three model components), one for each combination of training subset and model component. That is, in an embodiment, a neural network may be efficiently trained by varying, based at least in part on training efficiency of the neural network, both how a training data set is distributed among multiple computing devices and how components of the neural network are split and distributed among the multiple computing devices.

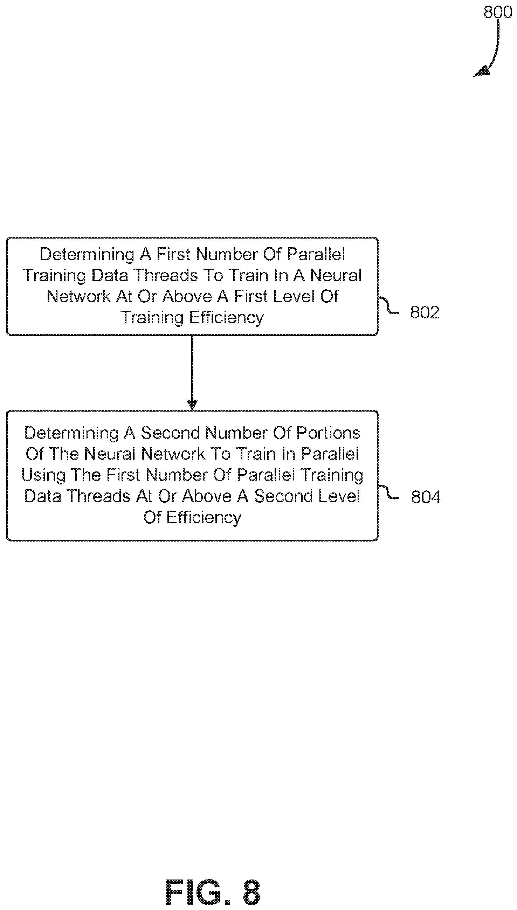

FIG. 8 shows another illustrative example of a process 800 for training a neural network in accordance with one embodiment. That is, in an embodiment, a neural network is trained by first determining a first number of parallel training data threads (e.g., using DP) at or above a first level of training efficiency 802 (e.g., maximum efficiency). In an embodiment, as described in FIG. 1, the training data threads are the global batch size. In an embodiment, process 800 describes a neural network that is trained by adjusting a first type of parallelism (e.g., DP) for training the neural network based at least in part on a first set of training tests that indicate training efficiency until a first level of training efficiency is reached. In an embodiment, this is performed until the neural network reaches a point that any further training of the network using an increased size of the global batch causes training slow down. In an embodiment, the overhead needed to communicate results with all of the devices (nodes) reaches a point where it starts to become inefficient. In an embodiment, as described with respect to FIG. 7, this first level of training efficiency that the neural network is training at or above is not the maximum efficiency but a level where the network experiences less efficiency gains than it would if MP were introduced.

As shown in FIG. 8, in an embodiment, the neural network is further trained by determining a second number of portions of the neural network to train (e.g., using MP) in parallel while using the first number of parallel training data threads at or above a second level of efficiency 804. In an embodiment, the neural network is further trained by implementing a second type of parallelism (e.g., a combined hybrid parallelism that includes both DP and MP) for training the neural network based at least in part a second set of training tests that indicate another level of training efficiency. In an embodiment, as indicated above with respect to FIG. 1 and FIG. 6, training tests are performed to determine the amount of MP to be introduced and further implemented to work in conjunction with DP to improve training times for training a network. In an embodiment, testing is done analytically or non-analytically to determine the amount of MP to be introduced. In an embodiment, if the testing results of applying MP (for a given model parallelization step) is large enough to overcome the scaling and statistical efficiency losses that comes from increased communication, synchronization overhead, and global batch size increase when using DP alone, employing a hybrid parallelization (e.g., using the combination of DP and MP) strategy improves network training time. In an embodiment, as described with respect to FIG. 1, training efficiency is indicative of training times and is measured and represented as a value such that, when analyzed, provides a user or separate system with information as to whether a neural network is being trained efficiently.

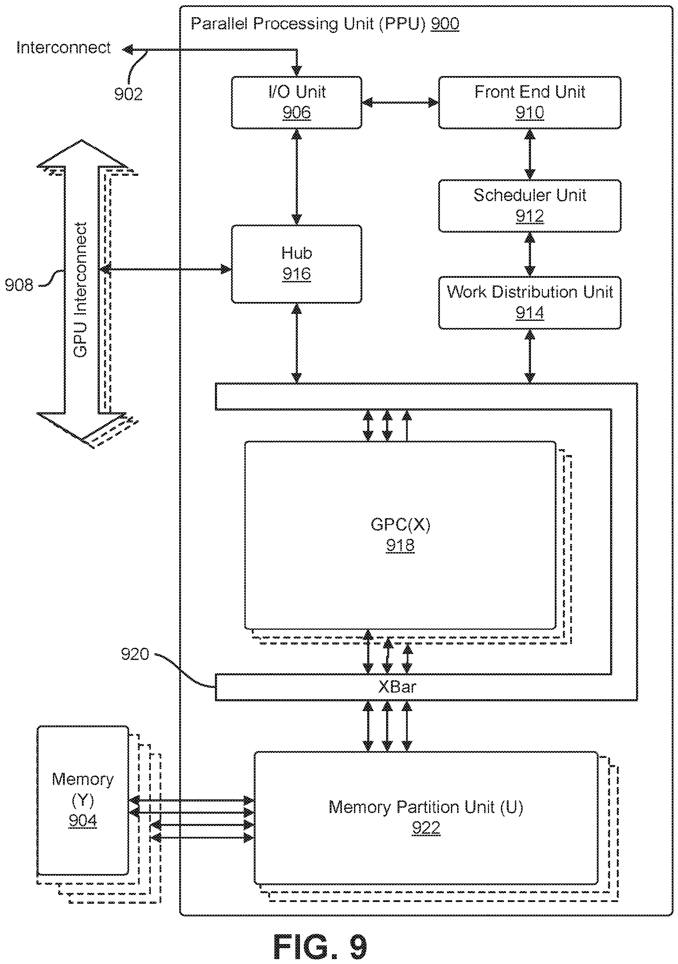

FIG. 9 illustrates a parallel processing unit ("PPU") 900, in accordance with one embodiment. In an embodiment, the PPU 900 is configured with machine-readable code that, if executed by the PPU, causes the PPU to perform some or all of processes and techniques described throughout this disclosure. In an embodiment, the PPU 900 is a multi-threaded processor that is implemented on one or more integrated circuit devices and that utilizes multithreading as a latency-hiding technique designed to process computer-readable instructions (also referred to as machine-readable instructions or simply instructions) on multiple threads in parallel. In an embodiment, a thread refers to a thread of execution and is an instantiation of a set of instructions configured to be executed by the PPU 900. In an embodiment, the PPU 900 is a graphics processing unit ("GPU") configured to implement a graphics rendering pipeline for processing three-dimensional ("3D") graphics data in order to generate two-dimensional ("2D") image data for display on a display device such as a liquid crystal display (LCD) device. In an embodiment, the PPU 900 is utilized to perform computations such as linear algebra operations and machine-learning operations. FIG. 9 illustrates an example parallel processor for illustrative purposes only and should be construed as a non-limiting example of processor architectures contemplated within the scope of this disclosure and that any suitable processor may be employed to supplement and/or substitute for the same.

In an embodiment, one or more PPUs are configured to accelerate High Performance Computing ("HPC"), data center, and machine learning applications. In an embodiment, the PPU 900 is configured to accelerate deep learning systems and applications including the following non-limiting examples: autonomous vehicle platforms, deep learning, high-accuracy speech, image, text recognition systems, intelligent video analytics, molecular simulations, drug discovery, disease diagnosis, weather forecasting, big data analytics, astronomy, molecular dynamics simulation, financial modeling, robotics, factory automation, real-time language translation, online search optimizations, and personalized user recommendations, and more.

In an embodiment, the PPU 900 includes an Input/Output ("I/O") unit 906, a front-end unit 910, a scheduler unit 912, a work distribution unit 914, a hub 916, a crossbar ("Xbar") 920, one or more general processing clusters ("GPCs") 918, and one or more partition units 922. In an embodiment, the PPU 900 is connected to a host processor or other PPUs 900 via one or more high-speed GPU interconnects 908. In an embodiment, the PPU 900 is connected to a host processor or other peripheral devices via an interconnect 908. In an embodiment, the PPU 900 is connected to a local memory comprising one or more memory devices 904. In an embodiment, the local memory comprises one or more dynamic random access memory ("DRAM") devices. In an embodiment, the one or more DRAM devices are configured and/or configurable as high-bandwidth memory ("HBM') subsystems, with multiple DRAM dies stacked within each device.

The high-speed GPU interconnect 908 may refer to a wire-based multi-lane communications link that is used by systems to scale and include one or more PPUs 900 combined with one or more CPUs, supports cache coherence between the PPUs 900 and CPUs, and CPU mastering. In an embodiment, data and/or commands are transmitted by the high-speed GPU interconnect 908 through the hub 916 to/from other units of the PPU 900 such as one or more copy engines, video encoders, video decoders, power management units, and other components which may not be explicitly illustrated in FIG. 9.

In an embodiment, the I/O unit 906 is configured to transmit and receive communications (e.g., commands, data) from a host processor (not illustrated in FIG. 9) over the system bus 902. In an embodiment, the I/O unit 906 communicates with the host processor directly via the system bus 902 or through one or more intermediate devices such as a memory bridge. In an embodiment, the I/O unit 906 may communicate with one or more other processors, such as one or more of the PPUs 900 via the system bus 902. In an embodiment, the I/O unit 906 implements a Peripheral Component Interconnect Express ("PCIe") interface for communications over a PCIe bus. In an embodiment, the I/O unit 906 implements interfaces for communicating with external devices.

In an embodiment, the I/O unit 906 decodes packets received via the system bus 902. In an embodiment, at least some packets represent commands configured to cause the PPU 900 to perform various operations. In an embodiment, the I/O unit 906 transmits the decoded commands to various other units of the PPU 900 as specified by the commands. In an embodiment, commands are transmitted to the front-end unit 910 and/or transmitted to the hub 916 or other units of the PPU 900 such as one or more copy engines, a video encoder, a video decoder, a power management unit, etc. (not explicitly illustrated in FIG. 9). In an embodiment, the I/O unit 906 is configured to route communications between and among the various logical units of the PPU 900.

In an embodiment, a program executed by the host processor encodes a command stream in a buffer that provides workloads to the PPU 900 for processing. In an embodiment, a workload comprises instructions and data to be processed by those instructions. In an embodiment, the buffer is a region in a memory that is accessible (e.g., read/write) by both the host processor and the PPU 900 - the host interface unit may be configured to access the buffer in a system memory connected to the system bus 902 via memory requests transmitted over the system bus 902 by the I/O unit 906. In an embodiment, the host processor writes the command stream to the buffer and then transmits a pointer to the start of the command stream to the PPU 900 such that the front-end unit 910 receives pointers to one or more command streams and manages the one or more streams, reading commands from the streams and forwarding commands to the various units of the PPU 900.

In an embodiment, the front-end unit 910 is coupled to a scheduler unit 912 that configures the various GPCs 918 to process tasks defined by the one or more streams. In an embodiment, the scheduler unit 912 is configured to track state information related to the various tasks managed by the scheduler unit 912 where the state information may indicate which GPC 918 a task is assigned to, whether the task is active or inactive, a priority level associated with the task, and so forth. In an embodiment, the scheduler unit 912 manages the execution of a plurality of tasks on the one or more GPCs 918.

In an embodiment, the scheduler unit 912 is coupled to a work distribution unit 914 that is configured to dispatch tasks for execution on the GPCs 918. In an embodiment, the work distribution unit 914 tracks a number of scheduled tasks received from the scheduler unit 912 and the work distribution unit 914 manages a pending task pool and an active task pool for each of the GPCs 918. In an embodiment, the pending task pool comprises a number of slots (e.g., 32 slots) that contain tasks assigned to be processed by a particular GPC 918; the active task pool may comprise a number of slots (e.g., 4 slots) for tasks that are actively being processed by the GPCs 918 such that as a GPC 918 completes the execution of a task, that task is evicted from the active task pool for the GPC 918 and one of the other tasks from the pending task pool is selected and scheduled for execution on the GPC 918. In an embodiment, if an active task is idle on the GPC 918, such as while waiting for a data dependency to be resolved, then the active task is evicted from the GPC 918 and returned to the pending task pool while another task in the pending task pool is selected and scheduled for execution on the GPC 918.

In an embodiment, the work distribution unit 914 communicates with the one or more GPCs 918 via XBar 920. In an embodiment, the XBar 920 is an interconnect network that couples many of the units of the PPU 900 to other units of the PPU 900 and can be configured to couple the work distribution unit 914 to a particular GPC 918. Although not shown explicitly, one or more other units of the PPU 900 may also be connected to the XBar 920 via the hub 916.

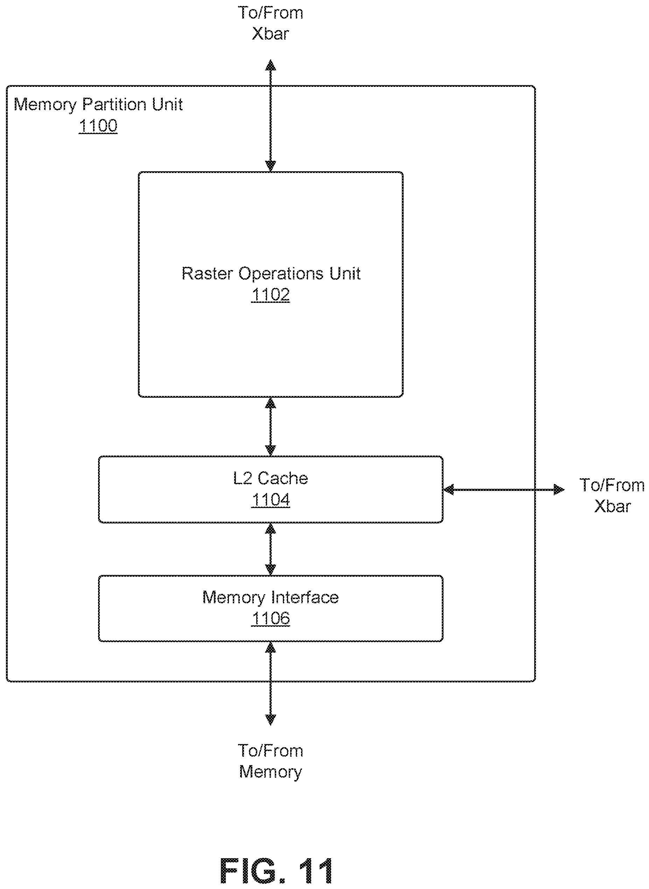

The tasks are managed by the scheduler unit 912 and dispatched to a GPC 918 by the work distribution unit 914. The GPC 918 is configured to process the task and generate results. The results may be consumed by other tasks within the GPC 918, routed to a different GPC 918 via the XBar 920, or stored in the memory 904. The results can be written to the memory 904 via the partition units 922, which implement a memory interface for reading and writing data to/from the memory 904. The results can be transmitted to another PPU 904 or CPU via the high-speed GPU interconnect 908. In an embodiment, the PPU 900 includes a number U of partition units 922 that is equal to the number of separate and distinct memory devices 904 coupled to the PPU 900. A partition unit 922 will be described in more detail below in conjunction with FIG. 11.

In an embodiment, a host processor executes a driver kernel that implements an application programming interface ("API") that enables one or more applications executing on the host processor to schedule operations for execution on the PPU 900. In an embodiment, multiple compute applications are simultaneously executed by the PPU 900 and the PPU 900 provides isolation, quality of service ("QoS"), and independent address spaces for the multiple compute applications. In an embodiment, an application generates instructions (e.g., in the form of API calls) that cause the driver kernel to generate one or more tasks for execution by the PPU 900 and the driver kernel outputs tasks to one or more streams being processed by the PPU 900. In an embodiment, each task comprises one or more groups of related threads, which may be referred to as a warp. In an embodiment, a warp comprises a plurality of related threads (e.g., 32 threads) that can be executed in parallel. In an embodiment, cooperating threads can refer to a plurality of threads including instructions to perform the task and that exchange data through shared memory. Threads and cooperating threads are described in more detail, in accordance with one embodiment, in conjunction with FIG. 11A.

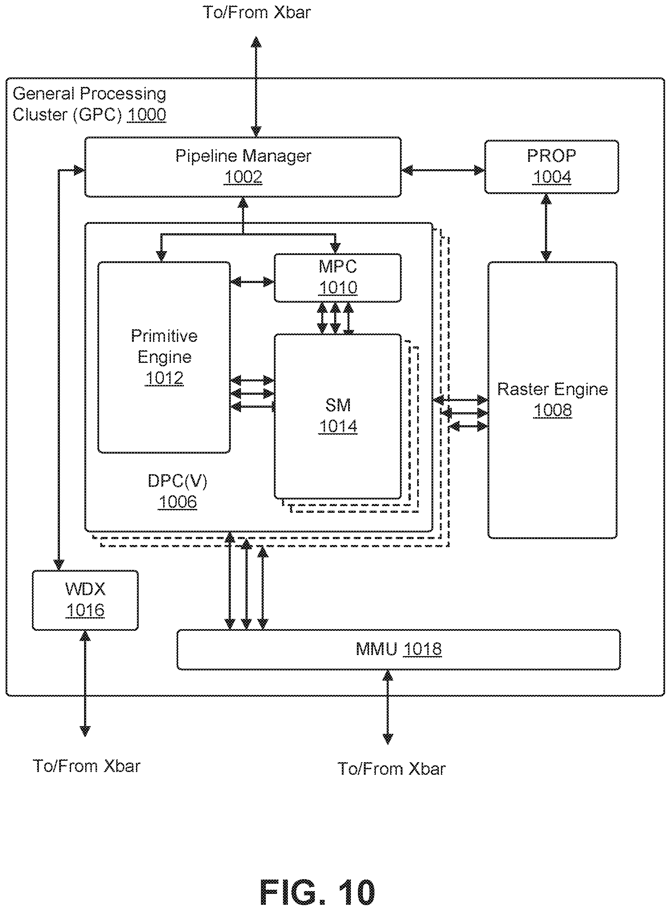

FIG. 10 illustrates a GPC 1000 such as the GPC illustrated of the PPU 900 of FIG. 9, in accordance with one embodiment. In an embodiment, each GPC 1000 includes a number of hardware units for processing tasks and each GPC 1000 includes a pipeline manager 1002, a pre-raster operations unit ("PROP") 1004, a raster engine 1008, a work distribution crossbar ("WDX") 1016, a memory management unit ("MMU") 1018, one or more Data Processing Clusters ("DPCs") 1006, and any suitable combination of parts. It will be appreciated that the GPC 1000 of FIG. 10 may include other hardware units in lieu of or in addition to the units shown in FIG. 10.

In an embodiment, the operation of the GPC 1000 is controlled by the pipeline manager 1002. The pipeline manager 1002 manages the configuration of the one or more DPCs 1006 for processing tasks allocated to the GPC 1000. In an embodiment, the pipeline manager 1002 configures at least one of the one or more DPCs 1006 to implement at least a portion of a graphics rendering pipeline. In an embodiment, a DPC 1006 is configured to execute a vertex shader program on the programmable streaming multiprocessor ("SM") 1014. The pipeline manager 1002 is configured to route packets received from a work distribution to the appropriate logical units within the GPC 1000, in an embodiment, and some packets may be routed to fixed function hardware units in the PROP 1004 and/or raster engine 1008 while other packets may be routed to the DPCs 1006 for processing by the primitive engine 1012 or the SM 1014. In an embodiment, the pipeline manager 1002 configures at least one of the one or more DPCs 1006 to implement a neural network model and/or a computing pipeline.

The PROP unit 1004 is configured, in an embodiment, to route data generated by the raster engine 1008 and the DPCs 1006 to a Raster Operations ("ROP") unit in the memory partition unit, described in more detail above. In an embodiment, the PROP unit 1004 is configured to perform optimizations for color blending, organize pixel data, perform address translations, and more. The raster engine 1008 includes a number of fixed function hardware units configured to perform various raster operations, in an embodiment, and the raster engine 1008 includes a setup engine, a coarse raster engine, a culling engine, a clipping engine, a fine raster engine, a tile coalescing engine, and any suitable combination thereof. The setup engine, in an embodiment, receives transformed vertices and generates plane equations associated with the geometric primitive defined by the vertices; the plane equations are transmitted to the coarse raster engine to generate coverage information (e.g., an x, y coverage mask for a tile) for the primitive; the output of the coarse raster engine is transmitted to the culling engine where fragments associated with the primitive that fail a z-test are culled, and transmitted to a clipping engine where fragments lying outside a viewing frustum are clipped. In an embodiment, the fragments that survive clipping and culling are passed to the fine raster engine to generate attributes for the pixel fragments based on the plane equations generated by the setup engine. In an embodiment, the output of the raster engine 1008 comprises fragments to be processed by any suitable entity such as by a fragment shader implemented within a DPC 1006.

In an embodiment, each DPC 1006 included in the GPC 1000 comprises an M-Pipe Controller ("MPC") 1010; a primitive engine 1012; one or more SMs 1014; and any suitable combination thereof. In an embodiment, the MPC 1010 controls the operation of the DPC 1006, routing packets received from the pipeline manager 1002 to the appropriate units in the DPC 1006. In an embodiment, packets associated with a vertex are routed to the primitive engine 1012, which is configured to fetch vertex attributes associated with the vertex from memory; in contrast, packets associated with a shader program may be transmitted to the SM 1014.

In an embodiment, the SM 1014 comprises a programmable streaming processor that is configured to process tasks represented by a number of threads. In an embodiment, the SM 1014 is multi-threaded and configured to execute a plurality of threads (e.g., 32 threads) from a particular group of threads concurrently and implements a SIMD (Single-Instruction, Multiple-Data) architecture where each thread in a group of threads (e.g., a warp) is configured to process a different set of data based on the same set of instructions. In an embodiment, all threads in the group of threads execute the same instructions. In an embodiment, the SM 1014 implements a SIMT (Single-Instruction, Multiple Thread) architecture wherein each thread in a group of threads is configured to process a different set of data based on the same set of instructions, but where individual threads in the group of threads are allowed to diverge during execution. In an embodiment, a program counter, call stack, and execution state is maintained for each warp, enabling concurrency between warps and serial execution within warps when threads within the warp diverge. In another embodiment, a program counter, call stack, and execution state is maintained for each individual thread, enabling equal concurrency between all threads, within and between warps. In an embodiment, execution state is maintained for each individual thread and threads executing the same instructions may be converged and executed in parallel for better efficiency. In an embodiment, the SM 1014 is described in more detail below.

In an embodiment, the MMU 1018 provides an interface between the GPC 1000 and the memory partition unit and the MMU 1018 provides translation of virtual addresses into physical addresses, memory protection, and arbitration of memory requests. In an embodiment, the MMU 1018 provides one or more translation lookaside buffers ("TLBs") for performing translation of virtual addresses into physical addresses in memory.

FIG. 11 illustrates a memory partition unit of a PPU, in accordance with one embodiment. In an embodiment, the memory partition unit 1100 includes a Raster Operations ("ROP") unit 1102; a level two ("L2") cache 1104; a memory interface 1106; and any suitable combination thereof. The memory interface 1106 is coupled to the memory. Memory interface 1106 may implement 32, 64, 128, 1024-bit data buses, or the like, for high-speed data transfer. In an embodiment, the PPU incorporates U memory interfaces 1106, one memory interface 1106 per pair of partition units 1100, where each pair of partition units 1100 is connected to a corresponding memory device. For example, PPU may be connected to up to Y memory devices, such as high bandwidth memory stacks or graphics double-data-rate, version 5, synchronous dynamic random access memory ("GDDR5 SDRAM").

In an embodiment, the memory interface 1106 implements an HBM2 memory interface and Y equals half U. In an embodiment, the HBM2 memory stacks are located on the same physical package as the PPU, providing substantial power and area savings compared with conventional GDDR5 SDRAM systems. In an embodiment, each HBM2 stack includes four memory dies and Y equals 4, with HBM2 stack including two 128-bit channels per die for a total of 8 channels and a data bus width of 1024 bits.

In an embodiment, the memory supports Single-Error Correcting Double-Error Detecting ("SECDED") Error Correction Code ("ECC") to protect data. ECC provides higher reliability for compute applications that are sensitive to data corruption. Reliability is especially important in large-scale cluster computing environments where PPUs process very large datasets and/or run applications for extended periods.

In an embodiment, the PPU implements a multi-level memory hierarchy. In an embodiment, the memory partition unit 1100 supports a unified memory to provide a single unified virtual address space for CPU and PPU memory, enabling data sharing between virtual memory systems. In an embodiment the frequency of accesses by a PPU to memory located on other processors is trace to ensure that memory pages are moved to the physical memory of the PPU that is accessing the pages more frequently. In an embodiment, the high-speed GPU interconnect 908 supports address translation services allowing the PPU to directly access a CPU's page tables and providing full access to CPU memory by the PPU.

In an embodiment, copy engines transfer data between multiple PPUs or between PPUs and CPUs. In an embodiment, the copy engines can generate page faults for addresses that are not mapped into the page tables and the memory partition unit 1100 then services the page faults, mapping the addresses into the page table, after which the copy engine performs the transfer. In an embodiment, memory is pinned (i.e., non-pageable) for multiple copy engine operations between multiple processors, substantially reducing the available memory. In an embodiment, with hardware page faulting, addresses can be passed to the copy engines without regard as to whether the memory pages are resident, and the copy process is transparent.

Data from the memory of FIG. 9 or other system memory is fetched by the memory partition unit 1100 and stored in the L2 cache 1104, which is located on-chip and is shared between the various GPCs, in accordance with one embodiment. Each memory partition unit 1100, in an embodiment, includes at least a portion of the L2 cache 1060 associated with a corresponding memory device. In an embodiment, lower level caches are implemented in various units within the GPCs. In an embodiment, each of the SMs 1140 may implement a level one ("L1") cache wherein the L1 cache is private memory that is dedicated to a particular SM 1140 and data from the L2 cache 1104 is fetched and stored in each of the L1 caches for processing in the functional units of the SMs 1140. In an embodiment, the L2 cache 1104 is coupled to the memory interface 1106 and the XBar 920.

The ROP unit 1102 performs graphics raster operations related to pixel color, such as color compression, pixel blending, and more, in an embodiment. The ROP unit $$50, in an embodiment, implements depth testing in conjunction with the raster engine 1125, receiving a depth for a sample location associated with a pixel fragment from the culling engine of the raster engine 1125. In an embodiment, the depth is tested against a corresponding depth in a depth buffer for a sample location associated with the fragment. In an embodiment, if the fragment passes the depth test for the sample location, then the ROP unit 1102 updates the depth buffer and transmits a result of the depth test to the raster engine 1125. It will be appreciated that the number of partition units 1100 may be different than the number of GPCs and, therefore, each ROP unit 1102 can, in an embodiment, be coupled to each of the GPCs. In an embodiment, the ROP unit 1102 tracks packets received from the different GPCs and determines which that a result generated by the ROP unit 1102 is routed to through the Xbar.

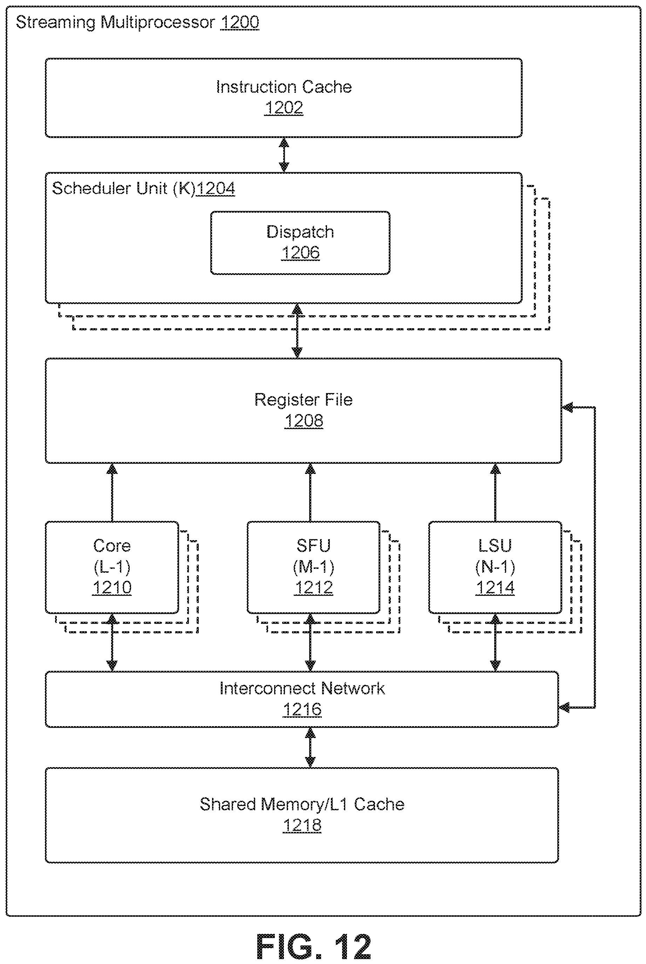

FIG. 12 illustrates a streaming multi-processor such as the streaming multi-processor of FIG. 10, in accordance with one embodiment. In an embodiment, the SM 1200 includes: an instruction cache 1202; one or more scheduler units 1204; a register file 1208; one or more processing cores 1210; one or more special function units ("SFUs") 1212; one or more load/store units ("LSUs") 1214; an interconnect network 1216; a shared memory/L1 cache 1218; and any suitable combination thereof. In an embodiment, the work distribution unit dispatches tasks for execution on the GPCs of the PPU and each task is allocated to a particular DPC within a GPC and, if the task is associated with a shader program, the task is allocated to an SM 1200. In an embodiment, the scheduler unit 1204 receives the tasks from the work distribution unit and manages instruction scheduling for one or more thread blocks assigned to the SM 1200. In an embodiment, the scheduler unit 1204 schedules thread blocks for execution as warps of parallel threads, wherein each thread block is allocated at least one warp. In an embodiment, each warp executes threads. In an embodiment, the scheduler unit 1204 manages a plurality of different thread blocks, allocating the warps to the different thread blocks and then dispatching instructions from the plurality of different cooperative groups to the various functional units (e.g., cores 1210, SFUs 1212, and LSUs 1214) during each clock cycle.

Cooperative Groups may refer to a programming model for organizing groups of communicating threads that allows developers to express the granularity at which threads are communicating, enabling the expression of richer, more efficient parallel decompositions. In an embodiment, cooperative launch APIs support synchronization amongst thread blocks for the execution of parallel algorithms. In an embodiment, applications of conventional programming models provide a single, simple construct for synchronizing cooperating threads: a barrier across all threads of a thread block (e.g., the syncthreads( ) function). However, programmers would often like to define groups of threads at smaller than thread block granularities and synchronize within the defined groups to enable greater performance, design flexibility, and software reuse in the form of collective group-wide function interfaces. Cooperative Groups enables programmers to define groups of threads explicitly at sub-block (i.e., as small as a single thread) and multi-block granularities, and to perform collective operations such as synchronization on the threads in a cooperative group. The programming model supports clean composition across software boundaries, so that libraries and utility functions can synchronize safely within their local context without having to make assumptions about convergence. Cooperative Groups primitives enable new patterns of cooperative parallelism, including producer-consumer parallelism, opportunistic parallelism, and global synchronization across an entire grid of thread blocks.

In an embodiment, a dispatch unit 1206 is configured to transmit instructions to one or more of the functional units and the scheduler unit 1204 includes two dispatch units 1206 that enable two different instructions from the same warp to be dispatched during each clock cycle. In an embodiment, each scheduler unit 1204 includes a single dispatch unit 1206 or additional dispatch units 1206.

Each SM 1200, in an embodiment, includes a register file 1208 that provides a set of registers for the functional units of the SM 1200. In an embodiment, the register file 1208 is divided between each of the functional units such that each functional unit is allocated a dedicated portion of the register file 1208. In an embodiment, the register file 1208 is divided between the different warps being executed by the SM 1200 and the register file 1208 provides temporary storage for operands connected to the data paths of the functional units. In an embodiment, each SM 1200 comprises a plurality of $L$ processing cores 1210. In an embodiment, the SM 1200 includes a large number (e.g., 128 or more) of distinct processing cores 1210. Each core 1210, in an embodiment, includes a fully-pipelined, single-precision, double-precision, and/or mixed precision processing unit that includes a floating point arithmetic logic unit and an integer arithmetic logic unit. In an embodiment, the floating point arithmetic logic units implement the IEEE 754-2008 standard for floating point arithmetic. In an embodiment, the cores 1210 include 64 single-precision (32-bit) floating point cores, 64 integer cores, 32 double-precision (64-bit) floating point cores, and 8 tensor cores.

Tensor cores are configured to perform matrix operations in accordance with an embodiment. In an embodiment, one or more tensor cores are included in the cores 1210. In an embodiment, the tensor cores are configured to perform deep learning matrix arithmetic, such as convolution operations for neural network training and inferencing. In an embodiment, each tensor core operates on a 4x4 matrix and performs a matrix multiply and accumulate operation $D = A \times B + C$, where A, B, C, and D are 4x4 matrices.

In an embodiment, the matrix multiply inputs A and B are 16-bit floating point matrices and the accumulation matrices C and D are 16-bit floating point or 32-bit floating point matrices. In an embodiment, the tensor cores operate on 16-bit floating point input data with 32-bit floating point accumulation. In an embodiment, the 16-bit floating point multiply requires 64 operations and results in a full precision product that is then accumulated using 32-bit floating point addition with the other intermediate products for a 4x4x4 matrix multiply. Tensor cores are used to perform much larger two-dimensional or higher dimensional matrix operations, built up from these smaller elements, in an embodiment. In an embodiment, an API, such as CUDA 9 C++ API, exposes specialized matrix load, matrix multiply and accumulate, and matrix store operations to efficiently use tensor cores from a CUDA-C++ program. In an embodiment, at the CUDA level, the warp-level interface assumes 16x16 size matrices spanning all 32 threads of the warp.

In an embodiment, each SM 1200 comprises $M$ SFUs 1212 that perform special functions (e.g., attribute evaluation, reciprocal square root, and the like). In an embodiment, the SFUs 1212 include a tree traversal unit configured to traverse a hierarchical tree data structure. In an embodiment, the SFUs 1212 include texture unit configured to perform texture map filtering operations. In an embodiment, the texture units are configured to load texture maps (e.g., a 2D array of texels) from the memory and sample the texture maps to produce sampled texture values for use in shader programs executed by the SM 1200. In an embodiment, the texture maps are stored in the shared memory/L1 cache. The texture units implement texture operations such as filtering operations using mip-maps (e.g., texture maps of varying levels of detail), in accordance with one embodiment. In an embodiment, each SM 1200 includes two texture units.

Each SM 1200 comprises $N$ LSUs 1154 that implement load and store operations between the shared memory/L1 cache 1106 and the register file 1208, in an embodiment. Each SM 1200 includes an interconnect network 1216 that connects each of the functional units to the register file 1208 and the LSU 1214 to the register file 1208, shared memory/ L1 cache 1218 in an embodiment. In an embodiment, the interconnect network 1216 is a crossbar that can be configured to connect any of the functional units to any of the registers in the register file 1208 and connect the LSUs 1214 to the register file and memory locations in shared memory/L1 cache 1218.

The shared memory/L1 cache 1218 is an array of on-chip memory that allows for data storage and communication between the SM 1200 and the primitive engine and between threads in the SM 1200 in an embodiment. In an embodiment, the shared memory/L1 cache 1218 comprises 128KB of storage capacity and is in the path from the SM 1200 to the partition unit. The shared memory/L1 cache 1218, in an embodiment, is used to cache reads and writes. One or more of the shared memory/L1 cache 1218, L2 cache, and memory are backing stores.

Combining data cache and shared memory functionality into a single memory block provides improved performance for both types of memory accesses, in an embodiment. The capacity, in an embodiment, is used or is usable as a cache by programs that do not use shared memory, such as if shared memory is configured to use half of the capacity, texture, and load/store operations can use the remaining capacity. Integration within the shared memory/L1 cache 1218 enables the shared memory/L1 cache 1218 to function as a high-throughput conduit for streaming data while simultaneously providing high-bandwidth and low-latency access to frequently reused data, in accordance with an embodiment. When configured for general purpose parallel computation, a simpler configuration can be used compared with graphics processing. In an embodiment, fixed function graphics processing units are bypassed, creating a much simpler programming model. In the general purpose parallel computation configuration, the work distribution unit assigns and distributes blocks of threads directly to the DPCs, in an embodiment. The threads in a block execute the same program, using a unique thread ID in the calculation to ensure each thread generates unique results, using the SM 1200 to execute the program and perform calculations, shared memory/L1 cache 1218 to communicate between threads, and the LSU 1214 to read and write global memory through the shared memory/L1 cache 1218 and the memory partition unit, in accordance with one embodiment. In an embodiment, when configured for general purpose parallel computation, the SM 1200 writes commands that the scheduler unit can use to launch new work on the DPCs.

In an embodiment, the PPU is included in or coupled to a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, and more. In an embodiment, the PPU is embodied on a single semiconductor substrate. In an embodiment, the PPU is included in a system-on-a-chip ("SoC") along with one or more other devices such as additional PPUs, the memory, a reduced instruction set computer ("RISC") CPU, a memory management unit ("MMU"), a digital-to-analog converter ("DAC"), and the like.

In an embodiment, the PPU may be included on a graphics card that includes one or more memory devices. The graphics card may be configured to interface with a PCIe slot on a motherboard of a desktop computer. In yet another embodiment, the PPU may be an integrate graphics processing unit ("iGPU") included in the chipset of the motherboard.

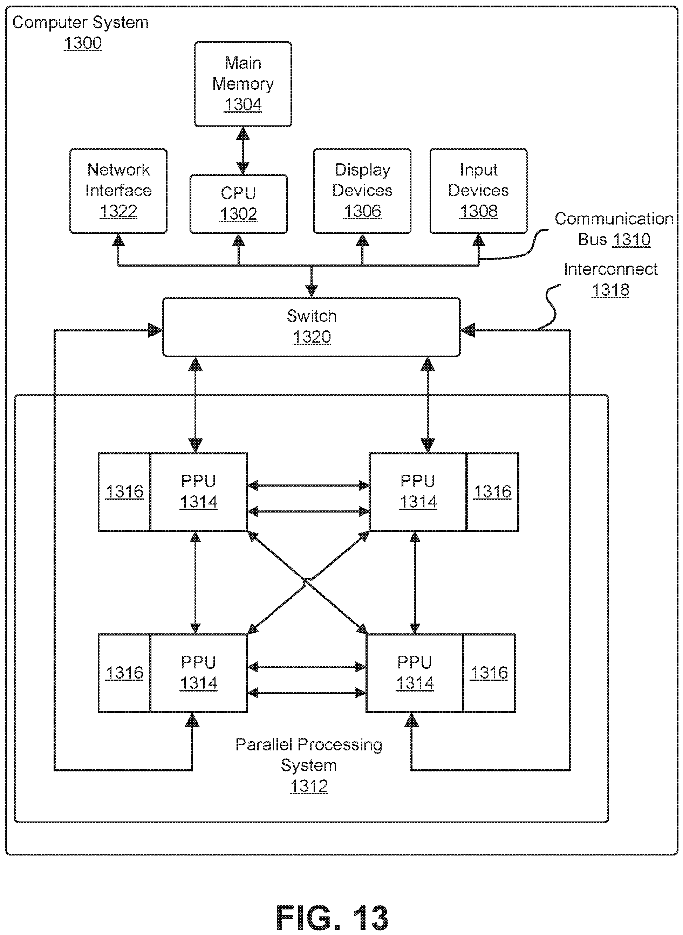

FIG. 13 illustrates a computer system 1300 in which the various architecture and/or functionality can be implemented, in accordance with one embodiment. The computer system 1300, in an embodiment, is configured to implement various processes and methods described throughout this disclosure.

In an embodiment, the computer system 1300 comprises at least one central processing unit 1302 that is connected to a communication bus 1310 implemented using any suitable protocol, such as PCI (Peripheral Component Interconnect), PCI-Express, AGP (Accelerated Graphics Port), HyperTransport, or any other bus or point-to-point communication protocol(s). In an embodiment, the computer system 1300 includes a main memory 1304 and control logic (e.g., implemented as hardware, software, or a combination thereof) and data are stored in the main memory 1304 which may take the form of random access memory ("RAM"). In an embodiment, a network interface subsystem 1322 provides an interface to other computing devices and networks for receiving data from and transmitting data to other systems from the computer system 1300.

The computer system 1300, in an embodiment, includes input devices 1308, the parallel processing system 1312, and display devices 1306 which can be implemented using a conventional CRT (cathode ray tube), LCD (liquid crystal display), LED (light emitting diode), plasma display, or other suitable display technologies. In an embodiment, user input is received from input devices 1308 such as keyboard, mouse, touchpad, microphone, and more. In an embodiment, each of the foregoing modules can be situated on a single semiconductor platform to form a processing system.

In the present description, a single semiconductor platform may refer to a sole unitary semiconductor-based integrated circuit or chip. It should be noted that the term single semiconductor platform may also refer to multi-chip modules with increased connectivity which simulate on-chip operation, and make substantial improvements over utilizing a conventional central processing unit ("CPU") and bus implementation. Of course, the various modules may also be situated separately or in various combinations of semiconductor platforms per the desires of the user.

In an embodiment, computer programs in the form of machine-readable executable code or computer control logic algorithms are stored in the main memory 1304 and/or secondary storage. Computer programs, if executed by one or more processors, enable the system 1300 to perform various functions in accordance with one embodiment. The memory 1304, the storage, and/or any other storage are possible examples of computer-readable media. Secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory.

In an embodiment, the architecture and/or functionality of the various previous figures are implemented in the context of the central processor 1302; parallel processing system 1312; an integrated circuit capable of at least a portion of the capabilities of both the central processor 1302; the parallel processing system 1312; a chipset (e.g., a group of integrated circuits designed to work and sold as a unit for performing related functions, etc.); and any suitable combination of integrated circuit.

In an embodiment, the architecture and/or functionality of the various previous figures is be implemented in the context of a general computer system, a circuit board system, a game console system dedicated for entertainment purposes, an application-specific system, and more. In an embodiment, the computer system 1300 may take the form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In an embodiment, a parallel processing system 1312 includes a plurality of PPUs 1314 and associated memories 1316. In an embodiment, the PPUs are connected to a host processor or other peripheral devices via an interconnect 1318 and a switch 1320 or multiplexer. In an embodiment, the parallel processing system 1312 distributes computational tasks across the PPUs 1314 which can be parallelizable for example, as part of the distribution of computational tasks across multiple GPU thread blocks. In an embodiment, memory is shared and accessible (e.g., for read and/or write access) across some or all of the PPUs 1314, although such shared memory may incur performance penalties relative to the use of local memory and registers resident to a PPU. In an embodiment, the operation of the PPUs 1314 is synchronized through the use of a command such as _syncthreads() which requires all threads in a block (e.g., executed across multiple PPUs 1314) to reach a certain point of execution of code before proceeding.

The specification and drawings are, accordingly, to be regarded in an illustrative rather than a restrictive sense. It will, however, be evident that various modifications and changes may be made thereunto without departing from the broader spirit and scope of the invention as set forth in the claims.

Other variations are within the spirit of the present disclosure. Thus, while the disclosed techniques are susceptible to various modifications and alternative constructions, certain illustrated embodiments thereof are shown in the drawings and have been described above in detail. It should be understood, however, that there is no intention to limit the invention to the specific form or forms disclosed, but on the contrary, the intention is to cover all modifications, alternative constructions, and equivalents falling within the spirit and scope of the invention, as defined in the appended claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal.

Conjunctive language, such as phrases of the form "at least one of A, B, and C," or "at least one of A, B and C," unless specifically stated otherwise or otherwise clearly contradicted by context, is otherwise understood with the context as used in general to present that an item, term, etc., may be either A or B or C, or any nonempty subset of the set of A and B and C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). The number of items in a plurality is at least two, but can be more when so indicated either explicitly or by context. Further, unless stated otherwise or otherwise clear from context, the phrase "based on" means "based at least in part on" and not "based solely on."

Operations of processes described herein can be performed in any suitable order unless otherwise indicated herein or otherwise clearly contradicted by context. In an embodiment, a process such as those processes described herein (or variations and/or combinations thereof) is performed under the control of one or more computer systems configured with executable instructions and is implemented as code (e.g., executable instructions, one or more computer programs or one or more applications) executing collectively on one or more processors, by hardware or combinations thereof. In an embodiment, the code is stored on a computer-readable storage medium, for example, in the form of a computer program comprising a plurality of instructions executable by one or more processors. In an embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In an embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause the computer system to perform operations described herein. The set of non-transitory computer-readable storage media, in an embodiment, comprises multiple non-transitory computer-readable storage media and one or more of individual non-transitory storage media of the multiple non-transitory computer-readable storage media lack all of the code while the multiple non-transitory computer-readable storage media collectively store all of the code. In an embodiment, the executable instructions are executed such that different instructions are executed by different processors for example, a non-transitory computer-readable storage medium store instructions and a main CPU execute some of the instructions while a graphics processor unit executes other instructions. In an embodiment, different components of a computer system have separate processors and different processors execute different subsets of the instructions.

Accordingly, in an embodiment, computer systems are configured to implement one or more services that singly or collectively perform operations of processes described herein and such computer systems are configured with applicable hardware and/or software that enable the performance of the operations. Further, a computer system that implement an embodiment of the present disclosure is a single device and, in another embodiment, is a distributed computer system comprising multiple devices that operate differently such that the distributed computer system performs the operations described herein and such that a single device does not perform all operations.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Embodiments of this disclosure are described herein, including the best mode known to the inventors for carrying out the invention. Variations of those embodiments may become apparent to those of ordinary skill in the art upon reading the foregoing description. The inventors expect skilled artisans to employ such variations as appropriate and the inventors intend for embodiments of the present disclosure to be practiced otherwise than as specifically described herein. Accordingly, the scope of the present disclosure includes all modifications and equivalents of the subject matter recited in the claims appended hereto as permitted by applicable law. Moreover, any combination of the above-described elements in all possible variations thereof is encompassed by the scope of the present disclosure unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

In the description and claims, the terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout the specification terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In a similar manner, the term "processor" may refer to any device or portion of a device that processes electronic data from registers and/or memory and transform that electronic data into other electronic data that may be stored in registers and/or memory. As non-limiting examples, "processor" may be a Central Processing Unit (CPU) or a Graphics Processing Unit (GPU). A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. The terms "system" and "method" are used herein interchangeably insofar as the system may embody one or more methods and the methods may be considered a system.

In the present document, references may be made to obtaining, acquiring, receiving, or inputting analog or digital data into a subsystem, computer system, or computer-implemented machine. The process of obtaining, acquiring, receiving, or inputting analog and digital data can be accomplished in a variety of ways such as by receiving the data as a parameter of a function call or a call to an application programming interface. In some implementations, the process of obtaining, acquiring, receiving, or inputting analog or digital data can be accomplished by transferring the data via a serial or parallel interface. In another implementation, the process of obtaining, acquiring, receiving, or inputting analog or digital data can be accomplished by transferring the data via a computer network from the providing entity to the acquiring entity. References may also be made to providing, outputting, transmitting, sending, or presenting analog or digital data. In various examples, the process of providing, outputting, transmitting, sending, or presenting analog or digital data can be accomplished by transferring the data as an input or output parameter of a function call, a parameter of an application programming interface or interprocess communication mechanism.

Although the discussion above sets forth example implementations of the described techniques, other architectures may be used to implement the described functionality, and are intended to be within the scope of this disclosure. Furthermore, although specific distributions of responsibilities are defined above for purposes of discussion, the various functions and responsibilities might be distributed and divided in different ways, depending on circumstances.

Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

**Claims**

1. A processor, comprising:
   one or more arithmetic logic units, ALUs, to infer information using one or more neural networks, wherein the one or more neural networks have been trained using a combination of training data parallelism and model parallelism to achieve a level of training efficiency.

2. The processor of claim 1, wherein the one or more neural networks have been trained by increasing data parallelism until an intermediate level of training efficiency is achieved and increasing model parallelism until the level of training efficiency is achieved, and preferably, the intermediate level of training efficiency is measured based at least in part on training times associated with using training data parallelism and the level of training efficiency is measured based at least in part on training times associated with using the combination of training data parallelism and model parallelism, and more preferably the one or more neural networks have been trained by:

   comparing training times associated with using training data parallelism and training times associated with using the combination of training data parallelism and model parallelism; and
   using the combination of training data parallelism and model parallelism based on the comparison.

3. The processor of claim 1 or 2, wherein the one or more neural networks have been trained by:

   obtaining configuration parameters associated with the one or more neural networks; and
   using the combination of training data parallelism and model parallelism based on the obtained information.

4. The processor of claim 2 or 3, wherein the one or more neural networks have been trained by reducing training model parallelism in response to slower training times.

5. A system, comprising:
   one or more computers having one or more processors to train one or more neural networks using a first number of training data threads to achieve a first level of training efficiency and a second number of portions of the one or more neural networks trained in parallel using the first number of training data threads to achieve a second level of training efficiency.

6. The system of claim 5, wherein the first number of training data threads is split into subsets to be distributed among the one or more processors to train the one or more neural networks.

7. The system of claim 5 or 6, wherein the second number of portions of the one or more neural networks trained in parallel is split into components to be distributed among the one more processors to train the one or more neural networks.

8. The system of any of claims 5 to 7, wherein the one or more computers having the one or more processors further train the one or more neural networks by

- increasing the first number of training data threads until the first level of training efficiency is achieved and/or
- comparing training times associated with using the first number of training data threads and training times associated with using the second number of portions of the one or more neural networks trained in parallel using the first number of training data threads; and using the second number of portions of the one or more neural networks trained in parallel using the first number of training data threads based on the comparison.

9. The system of any of claims 5 to 8, wherein the second number of portions of the one or more neural networks training in parallel using the first number of training data threads is increased in response to achieving the first level of training efficiency.

10. The system of any of claims 5 to 9, wherein the first level and second levels of training efficiency are based at least in part on information directed to power consumption of the system.

11. A machine-readable medium having stored thereon a set of instructions, which if performed by one or more processors, cause the one or more processors to at least:

train a neural network using a first number of parallel training data threads resulting in a first level of training efficiency; and
train a second number of portions of the neural network in parallel using the first number of parallel training data threads resulting in a second level of training efficiency.

12. The machine-readable medium of claim 11, wherein the first level of training efficiency is based at least in part on training times associated with training the neural network using the first number of parallel training data threads, and preferably the second level of training efficiency indicates training times associated with training the neural network using the second number of portions of the neural network in parallel in combination with using the first number of parallel training data threads.

13. The machine-readable medium of claim 11 or 12, wherein the set of instructions further cause the one or more processors to at least train the neural network by at least one of the following:

- adjusting the first number of parallel training data threads until the first level of training efficiency is achieved;
- comparing training times associated with using the first number of parallel training data threads and training times associated with using the second number of portions of the neural network in parallel using the first number of parallel training data threads; and using the second number of portions of the neural network in parallel using the first number of parallel training data threads based on the comparison;
- using the first number of parallel training data threads prior to using the second number of portions of the neural network in parallel using the first number of parallel training data threads.

14. A method comprising:

determining a first number of parallel training data threads to train a neural network at or above a first level of training efficiency; and
determining a second number of portions of the neural network to train in parallel using the first number of parallel training data threads at or above a second level of training efficiency.

15. The method of claim 14, wherein the first number of parallel training data threads is split into subsets to be distributed among one or more processors of a computer system to train the neural network and preferably the second number of portions of the neural network to train in parallel is split into components to be distributed among one more processors of a computer system to train the neural network.

16. The method of claim 14 or 15, wherein the first number of parallel training data threads to train the neural network is increased until the neural network is trained at or above the first level of training efficiency, wherein the first level of training efficiency is based at least in part on training speedup associated with using the first number of parallel training data threads to train the neural network.

17. The method of claim 16, wherein the second number of portions of the neural network to train in parallel using the first number of parallel training data threads is determined in response to the neural network being trained at or above the first level or training efficiency.

18. The method of any of claims 14 to 17, wherein the second number of portions of the neural network to train in parallel using the first number of parallel training data threads is based at least in part on training speedup associated with using the second number of portions to train the neural network.

FIG. 1

FIG. 2

EP 3 742 350 A1

FIG. 3

FIG. 4

400

GPU 2 → GPU 2 → GPU 2 → GPU 2 ← Subset Data Input

GPU 1 → GPU 1 → GPU 1 → GPU 1 ← Subset Data Input

Subset
Data Input

FIG. 5

EP 3 742 350 A1

FIG. 6

EP 3 742 350 A1

700

Train A Neural Network Using A First Number Of Parallel Training Data Threads Resulting In A First Level Of Training Efficiency — 702

Train A Second Number Of Portions Of The Neural Network In Parallel Using The First Number Of Parallel Training Data Threads Resulting In A Second Level Of Training Efficiency — 704

# FIG. 7

800

Determining A First Number Of Parallel
Training Data Threads To Train In A Neural
Network At Or Above A First Level Of
Training Efficiency      802

Determining A Second Number Of Portions
Of The Neural Network To Train In Parallel
Using The First Number Of Parallel Training
Data Threads At Or Above A Second Level
Of Efficiency      804

FIG. 8

Parallel Processing Unit (PPU) 900

Interconnect

902

I/O Unit
906

Front End Unit
910

Scheduler Unit
912

Work Distribution Unit
914

Hub
916

908

GPU Interconnect

GPC(X)
918

920

XBar

Memory
(Y)
904

Memory Partition Unit (U)
922

FIG. 9

To/From Xbar

General Processing
Cluster (GPC) 1000

Pipeline Manager
1002

PROP
1004

DPC(V)
1006

MPC
1010

Primitive
Engine
1012

SM
1014

Raster Engine
1008

WDX
1016

MMU 1018

To/From Xbar

To/From Xbar

FIG. 10

To/From
Xbar

Memory Partition Unit
1100

Raster Operations Unit
1102

L2 Cache
1104

To/From
Xbar

Memory Interface
1106

To/From
Memory

# FIG. 11

Streaming Multiprocessor 1200

Instruction Cache
1202

Scheduler Unit (K)1204

Dispatch
1206

Register File
1208

| Core (L-1) 1210 | SFU (M-1) 1212 | LSU (N-1) 1214 |

Interconnect Network
1216

Shared Memory/L1 Cache
1218

**FIG. 12**

**FIG. 13**

Europäisches
Patentamt

European
Patent Office

Office européen
des brevets

# EUROPEAN SEARCH REPORT

Application Number

EP 20 16 7965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG LINGHAO ET AL: "HyPar: Towards Hybrid Parallelism for Deep Learning Accelerator Array", 2019 IEEE INTERNATIONAL SYMPOSIUM ON HIGH PERFORMANCE COMPUTER ARCHITECTURE (HPCA), IEEE, 16 February 2019 (2019-02-16), pages 56-68, XP033532515, DOI: 10.1109/HPCA.2019.00027 [retrieved on 2019-03-26] * abstract; Sections 1-6 * | 1-18 | INV. G06N3/063 G06N3/08 |
| A | Stefan Hadjis ET AL: "Omnivore: An Optimizer for Multi-device Deep Learning on CPUs and GPUs", , 19 November 2016 (2016-11-19), XP055666965, Retrieved from the Internet: URL:https://arxiv.org/pdf/1606.04487.pdf [retrieved on 2020-02-10] * abstract; Sections I, IV-VI * | 1-18 | |
| A | FENG YAN ET AL: "Performance Modeling and Scalability Optimization of Distributed Deep Learning Systems", KNOWLEDGE DISCOVERY AND DATA MINING, ACM, 2 PENN PLAZA, SUITE 701 NEW YORK NY 10121-0701 USA, 10 August 2015 (2015-08-10), pages 1355-1364, XP058070920, DOI: 10.1145/2783258.2783270 ISBN: 978-1-4503-3664-2 * abstract; Sections 1, and 3-6 * | 1-18 | TECHNICAL FIELDS SEARCHED (IPC) G06N |

-/--

The present search report has been drawn up for all claims

| Place of search | Date of completion of the search | Examiner |
|---|---|---|
| The Hague | 16 September 2020 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHIHAO JIA ET AL: "Beyond Data and Model Parallelism for Deep Neural Networks", ARXIV.ORG, CORNELL UNIVERSITY LIBRARY, 201 OLIN LIBRARY CORNELL UNIVERSITY ITHACA, NY 14853, 14 July 2018 (2018-07-14), XP081248409, * abstract; Sections 1 and 3-8 * ----- | 1-18 | |

TECHNICAL FIELDS
SEARCHED      (IPC)

The present search report has been drawn up for all claims

| Place of search | Date of completion of the search | Examiner |
|---|---|---|
| The Hague | 16 September 2020 | Klasen, TJ |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................
& : member of the same patent family, corresponding
document

EPO FORM 1503 03.82 (P04C01)